# EUROPÄISCHE PATENTANMELDUNG

(11) **EP 1 965 226 A1**
(43) Veröffentlichungstag der Anmeldung: **03.09.2008**
(21) Anmeldenummer: 07004344.3
(22) Anmeldetag: 02.03.2007
(51) Int. Cl.: G01T 1/164, G01T 1/20

(54) **Vorrichtung zur Erfassung ionisierender Strahlung und zur bildlichen Darstellung von Objekten, Systeme sowie Verwendung davon**

(71) Anmelder: KEMMER, Josef, Dr., D-85764 Oberschleissheim (DE)
(72) Erfinder: KEMMER, Josef, Dr., D-85764 Oberschleissheim (DE)
(74) Vertreter: von Samson-Himmelstjerna, Friedrich

(57) **Zusammenfassung**

Die Erfindung betrifft eine Vorrichtung zur Erfassung ionisierender Strahlung und zur bildlichen Darstellung von Objekten, die mit dieser Strahlung durchleuchtet werden, umfassend:
mindestens einen Szintillator (2) zur Umwandlung der ionisierenden Strahlung in Photonen,
mindestens ein Detektorarray (3; 8) zur Registrierung der Photonen und einer Einrichtung zur digitalen Bilddarstellung,

wobei zwischen dem Szintillator (2) und dem Detektorarray (3; 8) ein optisches System (7) eingefügt ist, welches das Licht des Szintillators (2) derart fokussiert, dass es zumindest teilweise auf bestimmte Detektoren des Detektorarrays (3) abgebildet wird.

## Beschreibung

### GEBIETE DER ERFINDUNG

Die Erfindung betrifft eine Vorrichtung zur Erfassung ionisierender Strahlung und zur bildlichen Darstellung von Objekten, Systeme sowie Verwendungen davon.

### STAND DER TECHNIK

Detektorarrays zur bildlichen Darstellung von Körperteilen, die von Quellen ionisierender Strahlung durchleuchtet werden, sind in der Medizintechnik als Gamma bzw. Röntgen Kameras bekannt. Diese kommen bei vielfältigen diagnostischen und operativen Eingriffen zum Einsatz. So wird z.B. bei der Durchleuchtung des menschlichen Körpers als ionisierende Strahlung Röntgenstrahlung von etwa 150 keV Energie benutzt, da diese vom Gewebe nur schwach absorbiert wird und das im Wesentlichen aus Kalzium bestehende Knochengerüst sichtbar macht.

Alternativ ist es aber auch möglich, durch die Injektion eines Kontrastmittels, das die Röntgenstrahlung stärker absorbiert, Teile des Körpers sichtbar zu machen, an denen sich das Kontrastmittel anlagert oder wo es im Blut weitertransportiert wird. So wird z.B. in der Kardiologie die Durchblutung der Herzkranzgefäße bei der Angiographie in der Art sichtbar gemacht, dass das Kontrastmittel direkt über einen Katheder in das Herz injiziert und mit Blut zu den Arterien gebracht wird. Somit können Engstellen in den Herzkranzgefäßen erkannt werden.

Um eine bildliche Darstellung an beweglichen Objekten vornehmen zu können ist eine elektronische Erfassung der Röntgenstrahlung aus dem durchstrahlten Objekt und eine digitale Verarbeitung dieser Strahlung für die Bildauswertung unerlässlich. Da in der Medizintechnik häufig Röntgenstrahlung im Energiebereich von ca. 150 keV zum Einsatz kommt, werden zu ihrem Nachweis Detektoren benötigt, die eine hohe Empfindlichkeit in diesem Energiebereich aufweisen. Vorzugsweise würde man Festkörper- bzw.

Halbleiterdetektoren zur Anwendung bringen, da sie elektrisch sehr stabil sind, kleine Geometrien besitzen und in der Lage sind, ein elektrisches Signal zu liefern, das der Energie bzw. der Intensität der absorbierten Röntgenstrahlung proportional ist.

Da jedoch das Absorptionsvermögen des Detektormaterials mit der 5. Potenz der Ordnungszahl im Periodensystem ansteigt (Photoeffekt), scheiden z.B. Detektoren aus Silizium (Ordnungszahl 14) für den Direktnachweis aus. Sie sind zu unempfindlich für die in der Medizin häufig benutzten Röntgenenergien. Halbleiter aus schwereren Elementen wie Ge, GaAs, HgJ, CdTe usw. kommen aus praktischen Gründen nur bedingt zum Einsatz, da sie teilweise tief gekühlt werden müssen bzw. nicht in der benötigten Reinheit technisch vorhanden oder sehr teuer sind.

Aus diesen Gründen sind heutige Gamma Kameras in der Regel nach dem Angerprinzip so ausgestaltete, dass sie einen großflächigen, plattenartigen Absorber aus einem Szintillatormaterial (z.B. CsJ(T1)) enthalten, an dessen Rückseite eine Anordnung von Photomultipliern angekoppelt ist. Der Szintillator wandelt jedes in ihm absorbierte Gamma bzw. Röntgen Quant in eine große Anzahl von Lichtquanten um, die sich im Scintillator in alle Richtungen ausbreiten, von den Oberflächen wieder reflektiert werden und schließlich auf die rückseitigen Photomultiplier auftreffen, registriert und verstärkt werden. Um schräg einfallende Röntgenquanten zu eliminieren, da sie zu einer Verfälschung der Ortsinformation führen würden, wird dem Szintillator ein Kollimator vorgesetzt.

Die nachfolgende elektronische Signalverarbeitung und Datenerfassung erlaubt dann die 2-dimensionale digitale Darstellung des Röntgenbildes. Den Ort der registrierten Primärstrahlung gewinnt man dadurch, dass die Signale benachbarter Photomultiplier in Koinzidenz gemessen werden und eine Schwerpunktsbildung der Signalamplituden vorgenommen wird. Dabei macht man sich zunutze, dass die Photomultiplier in nächster Nachbarschaft zum Ort der Absorption die meisten Lichtquanten registrieren.

Diese Kameras sind relativ voluminös und die Photomultiplier sind in ihrer Verstärkungseigenschaft sehr temperaturempfindlich und erfordern zudem eine hohe Betriebspannung. Der Betrieb einer solchen Kamera ist deshalb technisch sehr aufwendig. Aus diesem Grund sind schon mehrere Versuche unternommen worden, von der technischen Entwicklung der letzten Jahre bei den Halbleiterdetektoren Gebrauch zu machen und die Photomulitplier durch Halbleiterdetektoren zu ersetzen.

Ein Beispiel dafür sind kleine Kameras, die aus einem Szintillatorkristall aufgebaut sind, an dessen Rückseite flächendeckend ein Array aus rauscharmen SDDs (Silizium Drift Detektor) angekoppelt ist. Auch Anordnungen mit SiPM (Silizium Photomultiplier) sind in der Erprobung. Prinzipiell konnte gezeigt werden, dass es möglich ist, unter Nutzung von verschiedenen Halbleiterdetektoren auch kleine Gamma Kameras für die Medizintechnik zu realisieren. (siehe z.B. Silicon drift photodetectors for scintillation readout in medical imaging, Nuclear Instruments and Methods in Physics Research Section A: Accelerators, Spectrometers, Detectors and Associated Equipment, Volume 571, Issues 1-2, 1 February 2007, Pages 126-129, C. Fiorini, A. Gola, M. Zanchi, A. Longoni, H. Soltau and L. Strüder)

Da im Gegensatz zu den Photomultipliern die einzelnen SDD Chips einen Dunkelstrom aufweisen, der ein Grundrauschen verursacht, müssen an die Qualität der SDD Chips hohe Anforderungen gestellt werden. Es ist zwar möglich durch Kühlung der Detektoren den Leckstrom zu reduzieren, aus technischen Gründen ist das bei einer Gamma Kamera jedoch nur in engen Grenzen praktikabel und daher von Nachteil. Ein weiterer Nachteil der jetzigen Anordnungen besteht darin, dass bei großen Kameras die SDD Chips eine gewisse Mindestfläche von ca. 1qcm aufweisen müssen, um noch mit einer begrenzten Anzahl von Chips auszukommen und dabei die gewünschte Ortsauflösung im Bereich von 1 mm oder darunter zu erreichen. Bei Kamera-Flächen von ca. 50 cm x 50 cm sind für ein solches ganzflächiges Detektorarray 2500 SDD Chips erforderlich. Diese müssen alle von exzellenter Qualität sein und elektronisch ausgelesen werden. Auch hier erfolgt die Ortsbestimmung nach dem Angerprinzip über die Schwerpunktsbildung der Signale benachbarter Zellen des Arrays.

Der Einsatz von SiPM, die nach dem Avalancheprinzip funktionieren, hat den Vorteil, dass das Grundrauschen dieser neuartigen Sensoren sehr niedrig ist und die Detektoren aufgrund des Lawineneffektes einen Verstärkungsfaktor von ca. 1 Million aufweisen. Damit kann eine kostspielige Verstärkerelektronik entfallen, jedoch ist es bis zum gegenwärtigen Zeitpunkt nicht gelungen großflächige SiPM der erforderlichen Qualität kommerziell herzustellen.

### KURZFASSUNG DER ERFINDUNG

Aufgabe der Erfindung ist es, neue Anordnungen für die visuelle digitale Darstellung von Objekten zur Verfugung zu stellen, die mit ionisierenden Quellen, vorzugsweise Röntgen bzw. Gamma Strahlung bestrahlt werden, welche die vorher beschriebenen Nachteile nicht aufweisen, und insbesondere an Stelle der Photomultiplier vorzugsweise für die Verwendung von Halbleitersensoren geeignet sind. Art und Typ der eingesetzten Halbleitersensoren ist von der Verfügbarkeit, ihrer Eignung und schließlich von den Kosten abhängig,

Nach einem ersten Aspekt stellt die Erfindung eine Vorrichtung zur Erfassung und digitalen Darstellung von Objekten, nach dem Gegenstand von Anspruch 1 bereit. Ein weiterer Aspekt der Erfindung ist auf die Systeme mit der genannten Vorrichtung, nach dem Gegenstand von Anspruch 13 und 14 gerichtet. Weitere Aspekte der Erfindung betreffen Verwendungen der genannten Vorrichtung in der Medizintechnik (Gamma Kamera, Computer Tomographie), der Sicherheitstechnik, der Materialanalyse oder Produktionskontrolle.

Zusätzliche Aspekte der Erfindung ergeben sich aus den abhängigen Ansprüchen, der nachfolgenden Beschreibung von Ausführungsbeispielen und der beigefügten Zeichnungen.

Zum Beispiel ist nach einem Ausführungsbeispiel ein weiterer Aspekt der Erfindung auf die Nutzung bzw. Kombination vorhandener Baugruppen gerichtet, mit deren Hilfe besonders kostengünstige und einfache Gamma Kameras hergestellt werden können. Weitere Aspekte der Erfindung betreffen die Signalverarbeitung und die Datenerfassung für die digitale Bilddarstellung.

Weitere Aspekte der Erfindung betreffen Anordnungen zur Erfassung von Quellen ionisierender Strahlung und von ihnen durchstrahlten Objekte sowie Maßnahmen zu ihrer Visualisierung. Ferner betrifft die Erfindung die Realisierung derartiger Anordnungen und Beispiele für Anwendungen in der Medizintechnik, der Materialanalyse, der Produktionsüberwachung und der Sicherheitstechnik. Des Weiteren betrifft die Erfindung Strahlungsquellen und die Kombination einer oder mehrerer derartiger Strahlungsquellen mit einem oder mehreren Anordnungen zur Erfassung dieser Strahlungsquellen und Maßnahmen für die digitale, bildliche Darstellung der durchstrahlten Objekte.

Nach einem weiteren Ausführungsbeispiel wird bei diesen neuen Anordnungen von der Kombination mehrerer Gedanken Gebrauch gemacht. So ist es nach dem ersten Erfindungsgedanken nicht erforderlich, die gesamte Rückseite des großflächigen Scintillators (z.B. 50 cm x 50 cm Fläche und ca. 1 cm Dicke) flächendeckend mit Detektoren relativ großer Fläche (typisch 100 qmm) zu belegen, wenn durch eine geeignete erfindungsgemäße Anordnung mit fokussierenden Eigenschaften, jeweils eine definierte Teilfläche des Scintillators (z.B. 100 qmm) auf einen viel kleineren Detektor von nur einigen wenigen qmm statt 100 qmm Fläche abgebildet wird. Damit dient, wie beim Stand der Technik, zwar der gesamte Scintillator als Absorber, aber die Fläche der Einzeldetektoren lässt sich um ein Vielfaches (mindestens das 20 fache) reduzieren. Außerdem hat eine solch nahtlose Anordnung fokussierender Elemente den Vorteil, dass keine ineffektiven Schichten existieren, wie sie sonst im Randbereich der Detektorchips bei einem flächendeckendem Array vorhanden sind.

Da der Leckstrom direkt mit der Fläche skaliert, ist auf diese Weise eine dramatische Reduktion des Leckstroms möglich, Wie allgemein bekannt, ist eine Reduktion des Sperrstroms um einen Faktor 2 bei Detektoren aus Silizium einer Temperaturerniedrigung um 7 Grad äquivalent. Das erlaubt einerseits den Betrieb der Kamera bei höheren Temperaturen (Raumtemperatur), andererseits eine Reduktion des Rauschpegels und damit eine Verbesserung des Signal/Rauschverhaltens bzw. der Ortsauflösung der Kamera. Aufgrund der extrem niedrigen Kapazität von SDDs spielt das kapazitive Rauschen nur eine untergeordnete Rolle.

Ein weiterer Vorteil eines Ausführungsbeispiels der erfindungsgemäßen Anordnung besteht in der drastischen Kostenreduktion durch die kleineren Detektoren, da einerseits bei der Massenproduktion pro Siliziumscheibe eine ca. 10 mal höhere Anzahl von Chips gefertigt werden kann, andererseits gleichzeitig mit kleinerer Fläche auch die Ausbeute an guten Chips ansteigt. Die Erfindung stellt damit einen wesentlichen Fortschritt in den Bemühungen dar, Röntgen Kameras bei Raumtemperatur mit Halbeiterdetektoren kostengünstig auszulesen.

Nach einem weiteren Ausführungsbeispiel können zur Realisierung der Schicht mit fokussierenden Eigenschaften und der Ankopplung der Detektoren an diese Schicht neuartige Solarzellenmodule aus III-V-Verbindungen benutzt werden, die unter dem Namen "Concentrator Modules" z.B. von der Firma Solar Tech AG in München angeboten werden und dieses Prinzip zur Gewinnung von Photostrom nutzen. Damit ließe sich eine beträchtliche Kostenreduktion und schnelle Realisierung von Röntgenkameras ermöglichen. Allerdings muss dieses Ausführungsbeispiel auf seine Realisierungsmöglichkeit noch experimentell überprüft werden. Da jedoch Photozellen ohne äußere Spannung betrieben werden, weisen sie keinen Leckstrom auf und der Rauschpegel ist damit sehr niedrig. Der Nachweis einer geringen Anzahl von Photonen ist deshalb durchaus möglich, sofern die Zellen klein sind und kein zusätzliches hohes kapazitives Rauschen aufweisen.

### KURZBESCHREIBUNG DER ZEICHNUNGEN

Weitere Aspekte und Merkmale der Erfindung werden nachstehend ohne Beschränkung des Erfindungsgedankens anhand von ausgewählten Ausführungsbeispielen in Bezugnahme auf die Zeichnungen exemplarisch beschrieben, auf die übrigens hinsichtlich der Offenbarung aller im Text nicht näher erläuterten erfindungsgemäßen Einzelheiten ausdrücklich verwiesen wird. Dabei zeigt:

Fig. 1 das Schema eines Beispiels einer einzelnen kommerziellen Bildzelle der Fa. KETEK, München, zur Erfassung von Röntgen- bzw. Gamma-Strahlung und der digitalen Darstellung ihrer Energie bzw. ihrer Intensität.

Fig. 2 ein Beispiel ein linearen Arrays bzw. Zeilenarrays, das dazu dient, eine 1-dimensionale, zeilenartige Abbildung eines bestrahlten Objektes zu ermöglichen.

Fig. 3 den Schnitt durch ein erfindungsgemäßes Ausführungsbeispiel eines 1- bzw. 2-dimensionalen Arrays, das sich jedoch im Aufbau vom vorherigen Beispiel durch die Einführung des erfindungsgemäßen Konzentrators unterscheidet.

Fig. 4 den Schnitt durch ein weiteres Ausführungsbeispiel eines 1- bzw. 2-dimensionalen Arrays, bei dem erfindungsgemäß kommerziell erhältliche Baugruppen in vorteilhafter Weise zum Einsatz kommen.

### BESCHREIBUNG BEVORZUGTER AUSFÜHRUNGSBEISPIELE

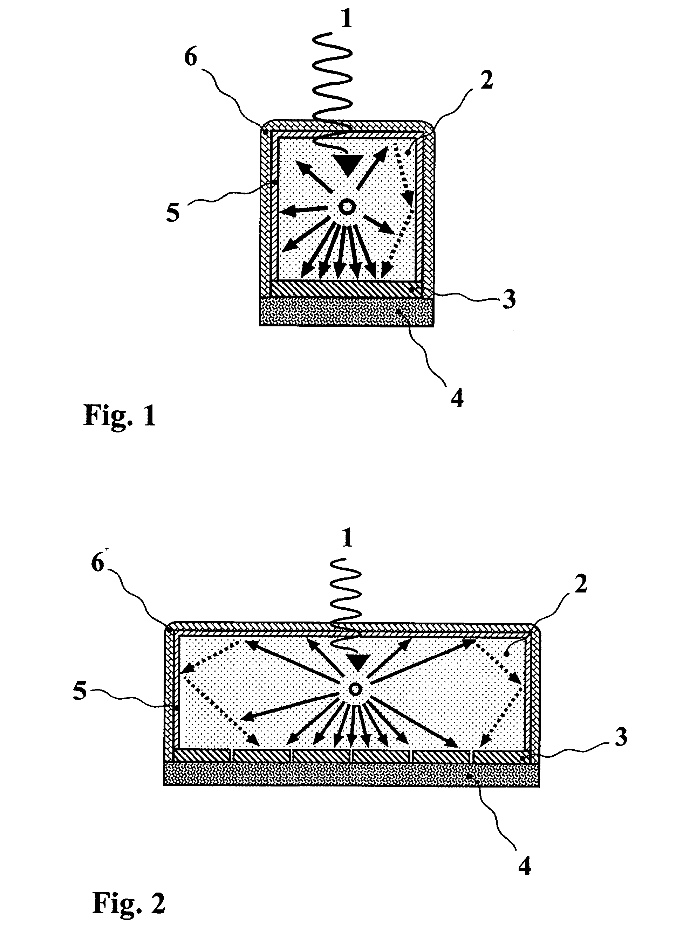

Fig. 1 zeigt ein Beispiel einer Einzelzelle für den Nachweis bzw. die Spektroskopie von Röntgen- bzw. Gammastrahlung wie sie z.B. von der Fa. KETEK, München, angeboten wird. Die Strahlung 1 wird in einem Szintillatorkristall 2 aus CsJ (Tl) (auch andere Szintillatoren sind möglich), in Lichtquanten (nicht nummerierte Pfeile) umgewandelt, die von einem SDD-Chip-Bauelement 3 nachgewiesen werden, das direkt an die Rückseite des Szintillators 2 mit einem Silikonkleber angekoppelt ist. Der Chip 3 selber sitzt auf einem Substrat 4, das die Spannungszufiihrungen und Teile der Elektronik (nicht gezeichnet) enthält. Die Umhüllung 5 der restlichen aufgerauten Oberfläche des Kristalls mit typischerweise einer Teflonfolie bzw. mit einer Bariumsulfatschicht dient zur Reflexion der Lichtquanten, die bei ihrer Entstehung nicht in Richtung des Detektors emittiert werden und den Kristall verlassen würden. Durch diffuse Rückstreuung des Lichtes an der aufgerauten Oberfläche des Szintillators lässt sich die Lichtausbeute beträchtlich erhöhen und das Signal/Rausch Verhalten verbessern. Gleichzeitig dient diese Umhüllung auch dazu, den Kristall nach außen gegen vorhandenes Licht abzuschirmen, das ebenfalls vom Detektor registriert würde, da der Szintillator transparent ist. Zusätzlich sind, wie in Fig. 1 gezeichnet, der Kristall und der Detektor in einem lichtdichten Gehäuse untergebracht, welches das ganze System vor mechanischer Beschädigung schützt.

Ohne Einschränkung des allgemeinen Erfindungsgedankens werden im weiteren Verlauf des Textes Detektoren aus Silizium (SDDs und. SiPM) und solche aus III-V- Verbindungen (z.B. Solarzellen aus GaAs) bevorzugt. Damit ist aber keine prinzipielle Einschränkung auf diese Art von Sensoren zum Ausdruck gebracht. Selbstverständlich sind auch andere Arten von Sensoren, wie kleine rauscharme PIN-Dioden möglich, die es erlauben aus einer gemessenen physikalischen Größe, in diesem Fall der Lichtintensität, eine Korrelation mit dem Primärereignis zu rekonstruieren.

Fig. 2. stellt den schematischen Schnitt eines Beispiels mit einem lineares Array dar, das im Aufbau mit der Einzelzelle der Fig. 1 beinahe identisch ist. Es unterscheidet sich lediglich durch eine stabförmige Form des Scintillators 2 der auf seiner Rückseite mit einem ganzen Array von Detektorchips 3 bestückt ist. Aufgrund der bereits früher beschriebenen Verteilung der erzeugten Lichtquanten auf mehrere nebeneinander liegende Detektorchips ist über die Signalhöhe der benachbarten Chips und die Schwerpunktsermittlung eine präzise Ortsbestimmung des registrierten Gammaquants möglich. Allerdings ist zur genauen Ortsbestimmung ein senkrechter oder ein möglichst auf die Einzelzellen begrenzter Einfallswinkels der Primärstrahlung erforderlich. Dazu dient in klassischen Kameras ein Kollimator, der hier nicht eingezeichnet ist.

Derartige Zeilenarrrays können in Computer-Tomographen zum Einsatz kommen. Außerdem können sie in der Personen- bzw. Gepäcküberwachung als Scanner eingesetzt werden, wobei sich entweder ein oder mehrere Zeilenarrays oder das zu überwachende Objekt bewegen und damit die zweite Dimension liefern. Dies ist besonders interessant bei der Suche nach radioaktivem Material oder schmutzigen Bomben an sensitiven Zugängen, wie bei Flugzeugen, Spezialbussen oder öffentlichen bzw. sportlichen Einrichtungen. Bei derartigen Anwendungen sind eine Röntgenquelle empfehlenswert, obwohl das zu suchende Material selbst eine Strahlung aufweist. Es wird jedoch in der Regel in einem Transportbehälter verstaut sein, der die Strahlung nach außen abschirmt. Dieser kann dann leicht über den Scanner mit der Röntgen Kamera entdeckt werden, selbst wenn er den Metalldetektor unbemerkt passiert haben sollte.

Benötigt man jedoch Röntgenquellen, wie z.B. bei der Gepäck- bzw. Personenkontrolle (bei Flughäfen, kombiniert mit den Metalldetektoren) so ist es besonders vorteilhaft Röntgenquellen einzusetzen, die von neuartigen Röntgenoptiken (Kapillaren bzw. Röntgenspiegeln) gebrauch machen und einen parallelen Röntgenstrahl liefern, welcher erfindungsgemäß der Geometrie der Detektorzeile angepasst ist. Damit entfällt der ansonsten notwendige Kollimator vor dem Zeilenarray, was die Kamera noch handlicher macht. Außerdem kann mit viel leistungsärmeren Röntgenquellen gearbeitet werden, deren geometrischer Aufbau und deren Betrieb und Kühlung eine Vereinfachung darstellen.

Größere Detektorarrays und Röntgenquellen lassen sich in vorteilhafte Weise aus standardisierten kleineren Einheiten zusammensetzen, um damit die Kosten zu reduzieren und bei fehlerhaften Teilen einen schnellen Austausch vornehmen zu können.

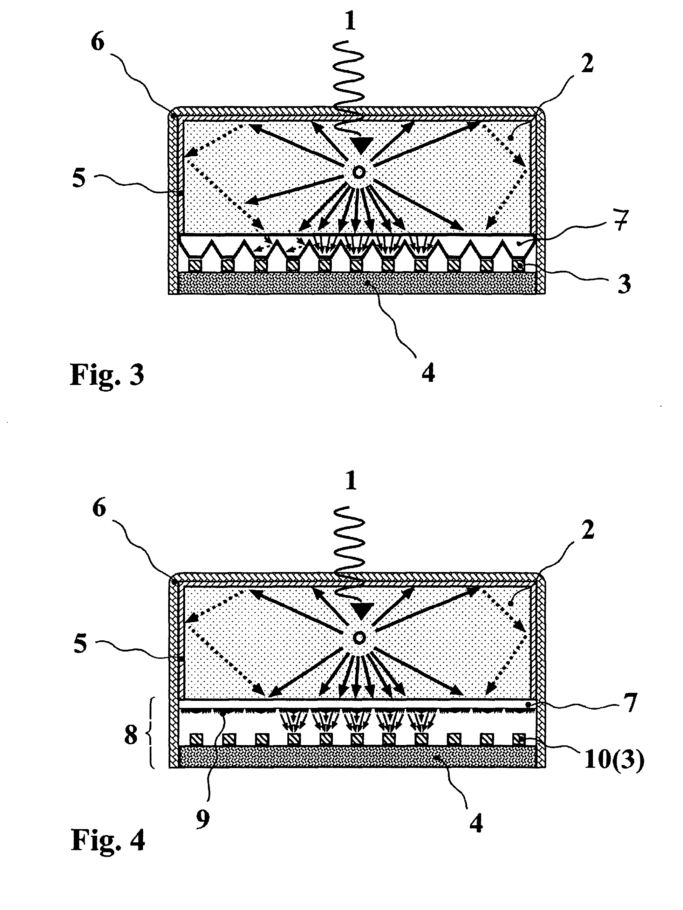

Fig. 3 zeigt erneut ein erfindungsgemäßes Ausführungsbeispiel mit einem linearen Array bzw. den Schnitt durch ein 2-dimensionals Array, bei dem zwischen Szintillatorkristall und dem Detektorarray eine Zwischenschicht 7 als optisches System oder sog. "Konzentrator" eingefügt ist, die so gestaltet ist, dass sie Gebiete definierter Flächen enthält (von etwa 5 mm x 5mm bis 10 mm x 10 mm Größe), die das auf sie auftreffende Licht kollimieren und auf eine Fläche von nur wenigen qmm konzentrieren. Damit ist es möglich Detektoren sehr kleiner Fläche einzusetzen und Kosten zu sparen bzw. die Qualität des Arrays zu verbessern.

Diese als Konzentrator dienende optische Zwischenschicht 7 kann vorteilhafter Weise aus Silikon gefertigt und in verschiedenen Formen ausgestaltet sein. Wichtig ist dabei, dass das in eine solche Zelle fallende Licht auf den darunter liegenden Detektor geleitet wird und in einzelnen Bündeln auf die jeweiligen Detektoren fokussiert wird. Allerdings ist es ausreichend, wenn die fokussierende Eigenschaft des Konzentrators für Zellen in der Nachbarschaft der Lichtquelle erfüllt ist. Weitere schräg einfallende Gammastrahlen werden zur Schwerpunktsbildung nicht genutzt und entweder durch einen Kollimator vor dem Szintillator oder durch den Einsatz einer parallele Röntgenquelle vermieden. Durch geeignete Koinzidenzschaltungen benachbarter Detektoren und die Definition eines Schwellenwertes wird zudem der Rauschpegel unterdrückt.

Auch hier ist es wieder von Vorteil, das gesamte 1- bzw. 2 dim. Array aus Untergruppen zusammenzusetzen, die einen kostengünstigen Aufbau des Gesamtsystems und einen schnellen Austausch fehlerhafter Teile erlauben. Dies gilt sowohl für die Röntgenquellen (bei paralleler Strahlführung) als auch für das Detektorarray. Detektorarrays, die auf einem Konzentrator aus Silicon aufgebaut sind, können leicht verformt werden und eignen sich in besonderer Weise beim Einsatz in Computer-Tomographen aller Art, auch für die Materialuntersuchung.

Fig. 4 stellt schematisch in einem weiteren Ausführungsbeispiel den Aufbau einer Gamma-Kamera dar, bei der ein kommerziell erhältliches Solarzellenarray 8 mit einem Konzentrator 7 aus Silikon an den Szintillatorkristall 2 angekoppelt ist. Der Konzentrator 7 besteht aus einem Array von Fresnellinsen 9, die auf einer Folie aus Silikon gefertigt sind und das Licht auf kleine Solarzellen 10 aus GaAs konzentrieren. Bei hermetischer, lichtdichter Abschirmung ist das Untergrundrauschen der Solarzellen sehr niedrig, da sie ohne Spannung betrieben werden und somit keinen Leckstrom aufweisen. Zum Rauschen trägt deshalb im Wesentlichen die Kapazität der Solarzelle bei. Der Funktionsnachweis dieser äußerst preiswerten Lösung der erfindungsgemäßen Aufgabe muss noch experimentell erbracht werden. Mit Sicherheit ist diese einfache Anordnung jedoch für hohe Strahlungsintensitäten in der Materialuntersuchung und evtl. auch bei der Gepäckkontrolle einsetzbar.

Für schwache Röntgenquellen können erforderlichenfalls die Solarzellen durch andere Detektoren (3) wie SDDs oder SiPM ersetzt werden, so dass dennoch der Vorteil der Massenproduktion der Aufbautechnik dieser Solarzellen genutzt werden kann.

Die Signalverarbeitung einer erfindungsgemäßen Gamma-Kamera, bei der z. B. SDDs zum Einsatz kommen, ist nicht gezeigt worden, da dies in der Literatur mehrmals beschrieben worden ist und damit zum Wissen des Fachmannes gehört, und außerdem die Elektronik für die Signalverstärkung und deren Auswertung kommerziell erhältlich ist. Eine kurze Beschreibung sollte für den Fachmann deshalb ausreichend sein.

Die in den SDDs registrierten Lichtquanten erzeugen einen Stromimpuls, der mit Hilfe eines rauscharmen ladungsempfindlichen Vorverstärkers in ein Spannungssignal umgewandelt und einem digitalen Pulsprozessor zugeführt wird. Dieser leitet die Signale an ein Speichermedium weiter, wo sie mit Hilfe einer Spezialsoftware als digitale Bilder dargestellt werden. Da prinzipiell jeder Kanal, d.h. jeder individuelle Detektor ausgelesen werden muss, ist der elektronische Aufwand beträchtlich. Die Kosten lassen sich jedoch stark erniedrigen, wenn vorhandene mehrkanalige ASIC Chips als Verstärker und mehrkanalige digitale Pulsprozessoren zum Einsatz kommen. Auch hier ist die Zusammensetzung einer größeren Detektormatrix eines Gesamtsystems aus Untergruppen, welche die erforderliche Elektronik bereits enthalten, von großem Vorteil.

Bei Nutzung von SiPM als Detektoren entfällt der teuerste sensitivste Teil der Elektronik, da durch die interne Verstärkung die Signale bereits so hohe Amplituden besitzen, dass auf die rauscharme Verstärkung verzichtet werden kann. Dies stellt deshalb eine besonders kostengünstige Ausführungsform dar. Da durch den Einsatz des erfindungsgemäßen Konzentrators auch kleine Detektorzellen zum Einsatz kommen können, ist der Aufbau einer Gamma Kamera mit SiPM zum jetzigen Zeitpunkt bereits möglich.

Die beschriebenen Ausführungsbeispiele stellen keine Einschränkung des allgemeinen Erfindungsgedankens dar. Auch jede andere Lösung, die zu einer lokal definierten Konzentration des Lichtes aus dem Szintillator auf ein geeignet angeordnetes Detektorarray oder eine einzelne Detektorzelle führt, erfüllt den Erfindungsgedanken.

Zu der Ausführung des Konzentrators kann noch ergänzt werden, dass natürlich auch ein optisches Linsensystem nutzbar ist, das vorteilhafter Weise in einen Silikonträger eingebettet ist. Ebenso kann Acrylglas (das evtl. zur Erhöhung der Lichtausbeute mit Nanokristallen versetzt ist) oder ein anderer transparenter Kunststoff als Material dienen. Auch eine Strukturierung der Rückseite des Szintillators selber ist durchaus möglich. Zur besseren Sammlung des Lichtes kann es vorteilhaft sein, Teile des Konzentrators zu verspiegeln bzw. mit einem reflektierenden Material wie Bariumsulfat zu beschichten.

Die Erfindung beschränkt sich ebenso nicht auf die ausgewählten Ausführungsbeispiele aus der Medizin oder der Sicherheitstechnik. Erwähnt wurde bereits der Einsatz in der Materialanalyse und der Produktionskontrolle. Sobald die Kameras erhältlich sind, werden sich erfahrungsgemäß weitere Einsatzgebiete ergeben.

## Patentansprüche

1. Vorrichtung zur Erfassung ionisierender Strahlung und zur bildlichen Darstellung von Objekten, die mit dieser Strahlung durchleuchtet werden, umfassend:
mindestens einen Szintillator (2) zur Umwandlung der ionisierenden Strahlung in Photonen,
mindestens ein Detektorarray (3; 8) zur Registrierung der Photonen und einer Einrichtung zur digitalen Bilddarstellung,
wobei zwischen dem Szintillator (2) und dem Detektorarray (3; 8) ein optisches System (7) eingefügt ist, welches das Licht des Szintillators (2) derart fokussiert, dass es zumindest teilweise auf bestimmte Detektoren des Detektorarrays (3; 8) abgebildet wird.

2. Vorrichtung nach Anspruch 1, **dadurch gekennzeichnet, dass** das optische System (7) das Licht des Szintillators zellenartig fokussiert und jede Zelle zumindest teilweise auf einen zugehörigen Detektor des Arrays abgebildet wird.

3. Vorrichtung nach Anspruch 1 oder 2, **dadurch gekennzeichnet, dass** das optische System (7) nahtlos aneinander grenzende fokussierende Elemente enthält.

4. Vorrichtung nach Anspruch 3, **dadurch gekennzeichnet, dass** jedes fokussierende Element eine Fresnellinse aufweist.

5. Vorrichtung nach Anspruch 3 oder 4, **dadurch gekennzeichnet, dass** die fokussierenden Elemente zumindest teilweise aus Silikon, Acrylglas oder einer Kombination von Linsen aus Acrylglas oder Glas mit Silikon bestehen.

6. Vorrichtung nach einem der Ansprüche 3 bis 5, **dadurch gekennzeichnet, dass** die fokussierenden Elemente Teile des Szintillators (2) selber sind.

7. Vorrichtung nach einem der vorherigen Ansprüche, **dadurch gekennzeichnet, dass** zur lokalen Fokussierung des Lichtes aus dem Szintillator (2) kommerzielle Solarzellenmodule auf Konzentratorbasis eingesetzt werden.

8. Vorrichtung nach einem der vorherigen Ansprüche, **dadurch gekennzeichnet, dass** geeignete Halbeiterdetektoren, vorzugsweise SDDs, rauscharm PIN-Dioden, SiPM oder GaAs-Photodioden zum Einsatz kommen.

9. Vorrichtung nach einem der vorherigen Ansprüche, **dadurch gekennzeichnet, dass** das Detektorarray aus Einzelmodulen zusammengesetzt ist, die jeweils aus einer geeigneten Anzahl einzelner Detektorchips bestehen.

10. Vorrichtung nach Anspruch 9, **dadurch gekennzeichnet, dass** zur Signalauswertung ein mehrkanaliger ASIC Vorverstärker in Kombination mit einem mehrkanaligen digitalen Pulsprozessor zum Einsatz kommen, die beide auf die Modulbauweise des Detektorarrays abgestimmt sind.

11. Verwendung der Vorrichtung nach einem der Ansprüche 1 bis 10, in der Medizintechnik (Gamma Kamera, Computer Tomographie), der Sicherheitstechnik, der Materialanalyse oder Produktionskontrolle.

12. Verwendung nach Anspruch 11, in der Personenkontrolle auf Flughäfen, bei Flugzeugen, in öffentlichen Verkehrsmittel und Gebäuden, sowie Fußballstadien und Sporthallen.

13. System umfassend:
mindestens ein Zeilenarray mit einer Mehrzahl von Vorrichtungen nach einem der Ansprüche 1 bis 10, und
und mindestens ein Zeilenarray für Röntgenquellen, die durch Einsatz von röntgenoptischen Elementen, wie Kapillaroptik und/oder Röntgenspiegel, paralleles Licht definierter Geometrie liefern.

14. System umfassend:
mindesten ein bewegliches Modul eines Zeilenarrays aus Vorrichtungen nach einem der Ansprüche 1 bis 10, und
mindestens einem synchron dazu beweglichem Modul einer Lichtquelle zum Abtasten von einer zu untersuchenden Person oder eines Objektes.

15. System nach Anspruch 13 oder 14, **dadurch gekennzeichnet, dass** an Stelle eines Zeilenarrays ein einzelner Detektor benutzt wird.

16. System nach einem der Ansprüche 13 bis 15, **dadurch gekennzeichnet, dass** dem Szintillatorkristall ein Kollimator vorgeschaltet ist

17. System nach einem der Ansprüche 13 bis 16, **dadurch gekennzeichnet, dass** das auf den Szintillator (2) auftreffende Licht einer Röntgenquelle durch den Einsatz von Kapillarlinsen und/oder Röntgenspiegeln parallel ausgerichtet ist.

18. System nach Anspruch 17, **dadurch gekennzeichnet, dass** das parallele Licht der Röntgenquelle von geeigneter Form, vorzugsweise kreisförmiger, sechseckiger, rechteckiger oder quadratischer Form ist und für größere Flächen in Modulbauweise nahtlos aneinander gefügt werden kann.
